# EUROPEAN PATENT APPLICATION

(11) **EP 4 292 428 A1**
(43) Date of publication of application: **20.12.2023**
(21) Application number: 22179246.8
(22) Date of filing: 15.06.2022
(51) Int. Cl.: A01K 47/02, A01K 59/00

(54) **A HONEYCOMB CASSETTE, A BASE OF A HONEYCOMB CASSETTE, A METHOD FOR PRODUCING THE HONEYCOMB CASSETTE, A BEEHIVE, AND A METHOD FOR PRODUCING COMB HONEY**

(71) Applicant: Korpikuusikon Hunaja Oy, 31600 Jokioinen (FI)
(72) Inventor: Aittamaa, Teemu, 31600 Jokioinen (FI)
(74) Representative: Berggren Oy

(57) **Abstract**

Disclosed is a honeycomb cassette for bee comb honey, the honeycomb cassette comprising a base comprising wood-based material and having a bottom wall and one or more sidewalls extending from the bottom wall and defining a cavity, wherein the one or more sidewalls comprise two or more extending wall portions having a height in the range of 4-8 mm, and a lid comprising wood-based material and being adapted to fit between the extending wall portions to cover the cavity. Disclosed is also the base, and a beehive comprising a plurality of the bases. Disclosed is also a method for preparing a honeycomb cassette and a method for producing bee honey.

## Description

### Field of the application

The present application relates to honeycomb cassettes comprising wood-based material, to bases of the honeycomb cassettes, and to methods for preparing thereof. The present application also relates to a beehive comprising bases of the honeycomb cassettes, and to a method for producing comb honey.

### Background

The process of making honey begins with the collection of nectar from flower by adult worker bees. The collected nectar is processed by the bees by regurgitation, enzymatic activity and water evaporation. Honeybees store honey in wax structures called honeycombs in hives.

When honey is produced at bee farms, it is necessary to collect the honey from the beehives. For this purpose specific removable open frames are inserted in beehives to allow the bees to build honeycombs to the frames, which can then be removed to harvest the honey from the honeycombs and reused in the hives. Usually the honey is harvested by the beekeeper by spinning the frames, and the honey is then further processed and packed. However in another business model it is desired to provide the honey-filled honeycombs as such as a final product. In such cases frames are not used but the beehives may be supplied with specific honeycomb cassettes, which can be closed and/or packed and provided to the end users, who will harvest the honey from the honeycombs. Such end users are usually customers who appreciate natural products, for example honey directly obtained from the beehives with as little as possible human intervention or artificial materials or ingredients. To provide the honeycombs to the end users may require mailing or otherwise transporting the cassettes.

Honeycomb cassettes are usually made of plastic, which allows versatile moulding of the cassettes according to needs. For example shapes such as hinges, locking means, grooves and the like can be formed in plastic cassettes. However such structures are fragile and may be damaged during handling, for example when removed from the hive or in mailing. The honey production is found to be less than optimal when plastic cassettes are used. Also the end users may not appreciate plastic casings. It is desired to obtain more acceptable honeycomb cassettes with high mechanical strength, low costs, more acceptable origin, appearance and biological compatibility. Ecological aspects are highly valued.

### Summary

In the present invention it was found out how to prepare honeycomb cassettes from wood-based materials. These cassettes could be prepared with high quality finish, which made it possible to obtain closable packages or casings without using other materials. The cassettes are well accepted by the bees, and it is also possible to finalize the appearance of the cassettes so that they can be provided as high quality products with special, even luxurious, appearance of the package as well as the content thereof. Therefore it is possible to provide honey products with perfect and finished appearance as gift and luxury products. The cassettes are also fully biodegradable, which enhances the conception of ecological products. The cassettes and parts thereof could be produced by fast and efficient methods thus allowing industrial scale processes and advantages over the whole production chains of cassettes and honey. The cassettes and the cassette bases are mechanically durable and tolerate different conditions.

The present application provides a honeycomb cassette for bee comb honey, the honeycomb cassette comprising
- a base 10 comprising wood-based material and having a bottom wall 12 and one or more sidewalls 14a, 14b, 14c, 14d extending from the bottom wall and defining a cavity 16, wherein the one or more sidewalls comprise two or more extending wall portions 18a, 18b, 18c, 18d having a height in the range of 4-8 mm, and
- a lid 20 comprising wood-based material and being adapted to fit between the extending wall portions to cover the cavity 16, such as wherein the lid comprises notches 22a, 22b, 22c, 22d adapted to fit to the two or more extending wall portions 18a, 18b, 18c, 18d, preferably wherein the lid 20 is separate from the base 10.

The present application also provides a base 10 of a honeycomb cassette comprising wood-based material and having a bottom wall 12 and one or more sidewalls 14a, 14b, 14c, 14d extending from the bottom wall and defining a cavity 16, wherein the one or more sidewalls comprise two or more extending wall portions 18a, 18b, 18c, 18d having a height in the range of 4-8 mm, the base 10 being adapted to receive a lid 20 comprising wood-based material and being adapted to fit between the extending wall portions 18a, 18b, 18c, 18d to cover the cavity 16.

The present application also provides a beehive comprising a plurality of the bases 10 of the honeycomb cassette.

The present application also provides a method for preparing a honeycomb cassette for production of bee comb honey, the method comprising
- providing wood-based material, such as a sheet comprising wood,
- cutting the wood-based material to obtain a base 10 comprising wood-based material and having a bottom wall 12 and one or more sidewalls 14a, 14b, 14c, 14d extending from the bottom wall and defining a cavity 16, wherein the one or more sidewalls comprise two or more extending wall portions 18a, 18b, 18c, 18d having a height in the range of 4-8 mm, and a lid 20 comprising wood-based material and being adapted to fit between the extending wall portions 18a, 18b, 18c, 18d to cover the cavity 16,
- providing a beeswax foundation,
- heating the bottom wall to a temperature above the melting point of the beeswax,
- applying the beeswax foundation onto the heated bottom wall 12 to partly melt the beeswax, and allowing to cool to attach the beeswax foundation onto the bottom wall.

The present application also provides a method for producing comb honey, the method comprising
- providing a plurality of the bases 10 of the honeycomb cassette in a beehive or the beehive comprising a plurality of the bases 10 of the honeycomb cassette,
- allowing the bees to produce comb honey to the bases 10, and
- removing a base 10 comprising comb honey from the beehive and adding a lid 20 comprising wood-based material and being adapted to fit between the extending wall portions 18a, 18b, 18c, 18d to cover the cavity 16.

The main embodiments are characterized in the independent claims. Various embodiments are disclosed in the dependent claims. The embodiments and examples recited in the claims and the specification are mutually freely combinable unless otherwise explicitly stated.

### Brief description of the figures

Figure 1 shows a schematic drawing of a honeycomb cassette with a base and a lid
Figure 2 shows a schematic drawing of a honeycomb cassette base with a honeycomb pattern
Figure 3 shows a photograph of a honeycomb cassette made of plywood.
Figure 4 shows a photograph of backside of a honeycomb cassette made of plywood having an embossing
Figure 5 shows a photograph of a sideview of an opened honeycomb cassette containing filled and sealed honeycomb
Figure 6 shows a photograph of inside of a beehive comprising a plurality of bases of the honeycomb cassettes, wherein a beekeeper is removing a base with a chisel
Figure 7 shows a photograph of a top view of an opened honeycomb cassette containing filled and sealed honeycomb
Figure 8 shows a photograph of a plastic honeycomb cassette containing filled and sealed honeycomb

### Detailed description

The open term "comprise" used herein also includes a closed term "consisting of as one option.

Disclosed is a honeycomb cassette for bee comb honey, more particularly for providing bee comb honey, and/or for production of bee comb honey. The base part of the honeycomb cassette, preferably a plurality of the base parts, is/are designed and/or intended to be inserted in a beehive, which may be in a form of a rectangular box, or any other applicable shape. The base parts are preferably designed to efficiently fill the interior of the beehive, more particularly a honey super, such that no waste space is left. For example a plurality of substantially hexahedron-shaped box-like base parts or elements with designed sizes can fill a beehive leaving no or substantially no waste space. The base parts may be inserted in one or more layers, and each layer may have one or more rows of the base parts. The base does not need to have any suspending parts for the cassette bases. Usually it is enough to have a substantially flat surface at the lower part of the hive, such as above a deep brood box, which is the place where the queen lays her brood eggs.

The honeycomb cassette comprises the base part and it may be provided with a lid, which may be separate from the case part, for example no hinges or the like attaching parts are present. The base part may be called a base, a base element, a cassette base, or a honeycomb cassette, in which case the cassette is however without a lid. The base parts or the cassettes differ from conventional frames for example in such respect that the frames are substantially open and flat to facilitate scraping or otherwise removing the honeycombs after the honey has been removed by spinning, and the frames are usually larger and they are not intended to be provided to the end users or customers, or to any other location outside the bee farm. The frames are cleaned after spinning to remove honeycombs, and returned to the hives. The frames may have suspending parts, such as extending parts for suspending, and they do not contain any parts enabling closing the structure. The frames are different in structure, function and purpose compared to honeycomb cassettes. The present cassettes provide a finalized package which protects the content and can be provided to customers as such as a high quality product, for example as a luxury product or as a gift product. The present honeycomb cassettes, or the cassette bases, are closable and can be provided as closed. They are intended, arranged and/or designed for storing, freezing, delivering and/or providing bee comb honey, preferably delivering and/or providing bee comb honey to end users, customers, shops or the like operators and/or locations outside the bee farm. It is possible to easily modify an existing hive using frames to use the present bases instead, which enables changing the operation model, such as the business model, of the bee farmer. Instead of further processing the honey at the site of production, the bee farmer can provide the raw honey in the cassettes as a final product.

The base 10 and the lid comprise wood-based material, or consist or are formed of wood-based material, which may be wood or material comprising wood, such as plywood. Preferably the cassette or the base do not comprise any connecting means or materials, such as adhesives, stickers, tapes, nails, screws, pins, hinges, locks or any other means or parts for binding the parts of the cassette or the base together, but the parts are rather combined by using accurately machined parts which set and lock to each other by effect of friction and/or elasticity of the wood-based material. The present cassettes or parts thereof can be easily prepared and combined, so the process is fast and inexpensive, and the obtained products can be prepared as biodegradable. The parts of the cassettes can be manufactured by a first operator and the parts may be delivered in compact packages to a second operator, such as a beekeeper, who can assemble the cassettes and/or bases, and use them. Alternatively the beekeeper may purchase the cassettes as assembled, for example from the manufacture or from a store.

Preferably the wood-based material has one or more wooden surfaces, preferably at least inside the base and/or at the parts of the base and the lid which are in contact with each other. In one embodiment the wood-based material comprises or is wood veneer or plywood. Wood-based materials were found to provide such surfaces which could efficiently receive and attach beeswax, and the bees can easily climb wooden surface. The bees were found to be attracted to wooden cassette bases, and therefore such biological material seems to be highly compatible with beekeeping applications and well tolerated. It was also found that the bees filled the cavity of the wooden cassette bases evenly so no space was wasted. The appearance of the content of the cassette is therefore attractive to the customers and the cassette is completely filled.

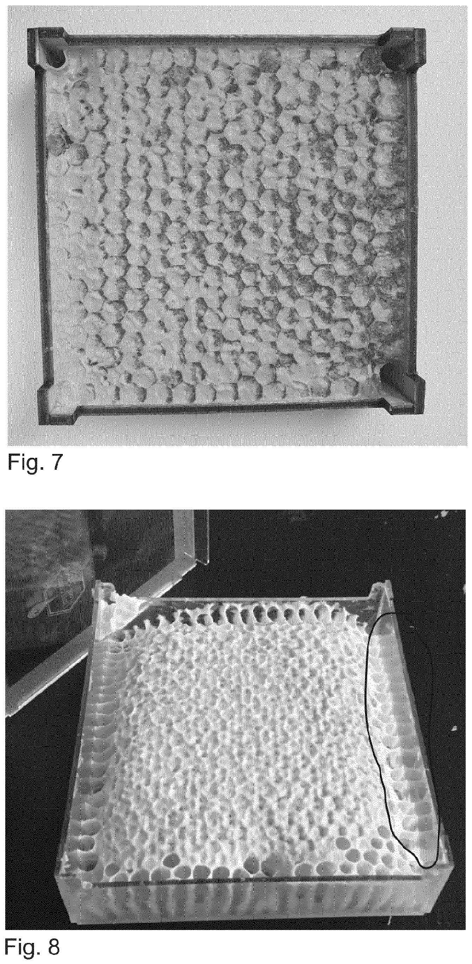

As a comparison, with plastic cassettes tested in the same environment the cavity was not filled completely and the appearance of the final product was less attractive as can be seen in Figure 8. There may be several reasons for this, such as the plastic material itself, the transparency of the plastic material and/or lower number of slots for entering the cassette bases. The plastic cassette bases had slots only on two opposing sides.

Wood-based bases and cassettes exhibited very good mechanical strength, which provides advantages over other materials, such as plastic, in many respects. For example when the bases are installed in a hive, the bees produce propolis (bee glue) which is a resinous mixture of saliva and beeswax with exudate gathered from tree buds, sap flows, or other botanical sources. The bees use it as a sealant for unwanted open spaces in the beehive. The bases will be attached to each other by propolis, and it often requires use of force to separate the bases from each other so that the bases can be collected from the hive. Tools are often used, such as chisels and the like. When a tool is placed between the bases and force is applied to break the propolis and release the bases, fragile bases would break and scratch easily. However the present wood-based bases tolerated such use of tools and mechanical force well and remained practically undamaged. Wood-based materials also tolerated other mechanical forces such as dropping, hurtling, pressure and the like.

Another advantage of the wood-based bases and cassettes is that they also tolerate freezing. As the honey tends to crystallize over time, it is sometimes desired to freeze the honey to stop the crystallization and to obtain a longer shelf-life. However bases and cassettes made of fragile materials such plastic do not tolerate freezing and can break easily.

Another phenomena which was observed was that plastic cassettes tend to collect condensing moisture during thawing after freezing and/or during storage, such as onto the inner surface of the cassette. The wooden cassettes however seemed to allow better evaporation of moisture, so substantially less moisture was observed in the wooden cassettes compared to plastic cassettes. An optimal moisture of honey is about 16-17% by weight and too high moisture content decreases the shelf-life of the honey. For example already at about 20% by weight moisture the honey starts to ferment. Therefore the wooden cassettes showed remarkable better shelf life of the honey over plastic cassettes.

The base has a bottom wall 12 and one or more sidewalls 14a, 14b, 14c, 14d extending from the bottom wall and defining a cavity 16. The base has an opening to the cavity at the opposite side to the bottom wall. The base and the sidewalls may be different parts or they may be formed of one part. For example the base may be formed of a solid piece of wood-based material, or it may be formed of separate pieces of wood sheets or wood veneer sheets. In one embodiment the base has four sidewalls.

The shape or the cross-section of the base may be any suitable shape or cross-section. Common forms for all types of bases are square-shaped cross-sections, wherein the closed cassette is substantially hexahedron or a rectangular cuboid-shaped, such as a box-like. In one example, especially in the case wherein the base is formed from a one piece of wood based-material, the cross-section of the base, as well as the cassette has a round shape, so the cassette may be cylindrical, and therefore having only one side wall. A base formed from a single piece of wood-based material may be prepared by a milling machine or any other applicable tool or device. Also such forms may have two or more, such as four or more extending wall portions. Other forms may be applied as well, such as the cross-section may be for example polygonal or elliptical. However the shape of the base or the cassette has an impact to the efficiency of filling the interior of the hive, but also the shape of the hive or the interior of the hive may vary, and the shape of the bases may be designed to be compatible with the hive.

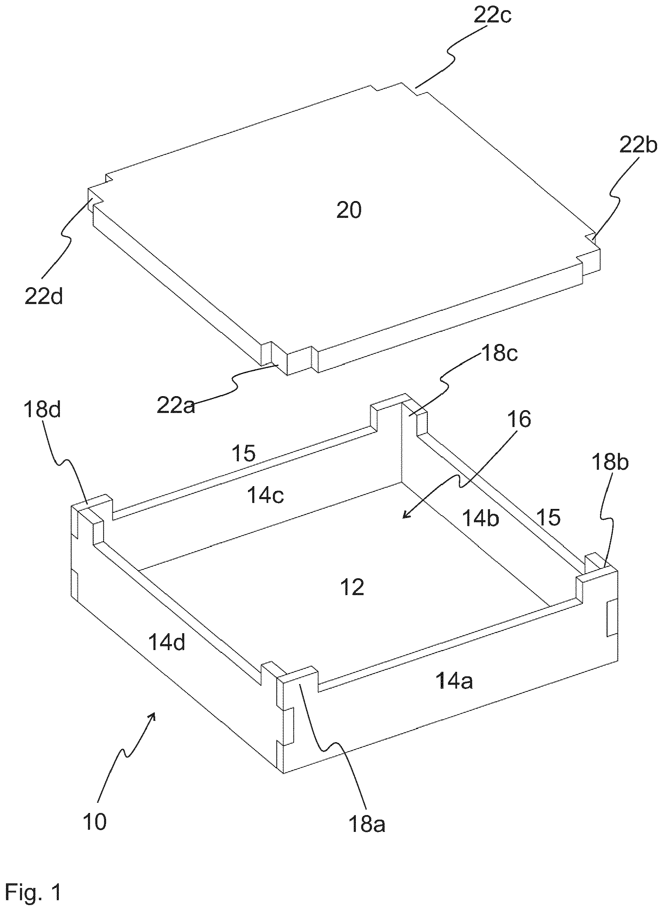

The bottom wall defines the bottom of the cavity, and it may be a sheet of wood, wood veneer or plywood attached to the sidewalls. The bottom wall may be attached to the side wall(s) by using adhesive or without adhesive. The bottom wall may be below the side walls, i.e. the side walls may be placed onto the bottom wall. The bottom wall and/or the sidewall(s) may comprise compatible notches and/or grooves for attaching these parts together. The bottom wall may be adapted to be locked between second extending wall portions of the sidewalls by the effect of friction between the extending wall portions and the bottom wall. These second extending wall portions may be called lower wall portions, as they are located at the bottom wall side of the sidewalls. Expressions such as "lower" or "bottom"; and "upper", "top" or "up" may be used referring to situation wherein a base is placed in such way that the bottom wall is at the bottom and the opening to the cavity is at the top, such as shown in Figure 1. The second extending wall portions preferably have a height which is equal to the thickness of the bottom wall. This height may be lower than the height of the first extending wall portions, especially when the thickness of the parts forming the base is lower than the thickness of the lid. The thickness (the smallest dimension) of the bottom wall and/or the side walls may be for example in the range of 2-5 mm, such as 2-3 mm, for example about 2 mm or about 3 mm. The side walls have a length, which is the longest dimension, a height, which is the dimension between the bottom and the top of the sidewall measured from the end of an extending portion, and a thickness, which is the lowest dimension and usually defined by the thickness of the wood-based sheet used to prepared the side walls.

The one or more sidewalls comprise two or more extending wall portions 18a, 18b, 18c, 18d having a height in the range of 4-8 mm, thus leaving openings in the sidewall between two extending wall portions. These extending wall portions may be called first extending wall portions and/or upper wall portions. The first extending wall portions are at the opposite end of the sidewalls to the bottom wall, i.e. at the upper end or side or the second side of the sidewalls, wherein the bottom wall would be at the lower end or side or at the first end or side. The bottom wall and/or the sidewalls may have same thickness over the whole area of the sidewall, preferably the sheet forming the bottom wall and/or the sidewall, i.e. the bottom wall and/or the sidewalls are not cut or machined in such way that the thickness thereof is decreased at any point.

The one or more sidewalls may comprise in total four or more extending wall portions when the base comprises four side walls. The extending wall portions may be at the corners of the base, i.e. at the junctions of two side walls. The extending wall portions at the corners may have an L-shape, and such an extending wall portion may be formed of portions of two joining side walls, as can be seen in the figures. In such case a sidewall may have an extending wall portion at two ends of the longest dimension of the sidewall.

The height of the extending (upper) wall portions 18a, 18b, 18c, 18d defines the height of a slot 15 which slot is formed between adjacent base parts 10 or a wall in a beehive, when the extending wall portions contact the bottom wall of the adjacent base part or a wall of the beehive, or a super, i.e. elongated openings at the sidewall between two extending wall portions are provided. Preferably there is a slot at every side of a square-shaped base, which allows efficient passage for the bees and ventilation of the honeycombs. The height may be for example in the range of 4-7 mm, 4-6 mm, 5-8 mm, 5-7 mm, 6-8 mm or 6-7 mm, such as about 5 mm, about 5.5 mm, about 6 mm, about 6.5 mm or about 7 mm. This height is determined mainly by the type of bees kept in the colony. The most used bees in Europe are Italian bees (*Apis mellifera ligustica*), which is a subspecies of the western honey bee (*Apis mellifera*). Also Carniolan bees (*Apis mellifera carnica*) are widely used. The slot height in said range allows the worker bees to enter the honeycomb bases, wherein they can process the honeycombs and provide honey, but prevent the queen and the drones, which are larger, entering the bases and therefore the queen cannot lay eggs therein and the drones cannot interfere the workers. This is important for the efficiency of honey production and maintenance of the honeycomb system. A slot height up to 6-7 mm, such as 5-7 mm, is especially suitable for the Italian and Carniolan worker bees. A lower slot height down to 4 mm allows only smaller, such as younger, worker bees to enter. The length of a slot is lower than the length of a sidewall. The base may be adapted to a specific bee subspecies, and/or the base may be adapted to allow only the worker bees to enter when the base is installed in a hive.

The height of the sidewall 14a, 14b, 14c, 14d at the site of the slot 15 practically defines the height of the formed honeycomb if the bees will utilize all the available space. This height may be in the range of 18-25 mm, such as 18-22 mm, for example about 20 mm. The space having the height in the range of 4-8 mm defined by the extending portions 18a, 18b, 18c, 18d of the sidewall is not built as the bees need this space to move, work and for example to evaporate water from the honey by the effect of their wings.

Provided is a lid 20 comprising wood-based material and being adapted to fit between the extending wall portions to cover the cavity 16. The lid may be provided with the base part, and the combination may be called a cassette, or a cassette comprising a lid. Preferably the lid 20 is separate from the base. Also disclosed is a method for preparing the lid.

The lid, which is preferably a flat lid, may comprise, consist of, or be made of the same or different wood-based material as the base, which may comprise a wood-based sheet, and it may have the same or different thickness as the wood-based material of the base. The thickness of the wood-based material of the base and/or of the lid may be for example in the range of 4-8 mm, such as in the range of 6-7 mm, 5-7 mm or 6-8 mm, for example 5 mm, 6 mm or 7 mm. The lid may have a higher thickness than the thickness of the sheets or the walls of the base. A thicker lid thickness facilitates the attachment of the lid to the base, as there is more surface area in the lid that is in contact with the extending portions of the sidewalls. Also a thick lid will strengthen the whole cassette and protect the content thereof.

The wood-based material may be wood veneer or plywood. Wood veneer was found to be advantageous material for the present use as it is readily available in desired thicknesses and it is very durable, however exhibiting also the desired properties of wood. In the present beekeeping and honey production uses wood was found to be ideal material as the bees seemed to prefer wood over other materials. The beeswax required in the honeycomb structures can attach wood very well as such. The wood is also non-transparent material, which seemed to have an impact to the efficiency of the honey production, but the non-transparency also protects the filled cassettes from light, which has an adverse effect to the content. There is no need to form any patterns onto the wood-based sheets or treat the surfaces with any specific treatment to obtain the functionalities discussed herein. The surface of the wood-based material may be unpatterned, untreated and/or plain, and the wood-based materials, such as sheets thereof, are preferably solid thus having no holes or other apertures.

In one embodiment the wood-based sheet comprises a plywood sheet. The plywood may be any suitable plywood, such as disclosed herein. The plywood may be selected according to the thickness of the sheet, and also the material of the plywood or a surface ply may be selected for example if a specific appearance of the final product is desired.

Plywood is an engineered wood product in a form of a sheet material manufactured from thin layers or plies of wood veneer that are glued together with adjacent layers having their wood grain rotated up to 90 degrees to one another. The plywood discussed herein, such as a plywood sheet, contains at least two plies. However, in most cases a plywood contains at least three plies. In one specific example a plywood contains only three plies. The plywood may consist of the plies and the adhesive layer(s) disclosed herein, so between two plies there may be only an adhesive layer. The plywood may also comprise other layers, such as fibrous layers, so in such case between two plies there may be an adhesive layer and a fibrous layer, or an adhesive layer comprising fibers. The plywood may comprise only the layers disclosed in the examples herein, especially between the plies.

In general plywood contains adhesive, which is often called as resin, and wood fibre sheets which may be called as veneers or plies, and it is present as composite material. The alternation of the grain in the plies is called cross-graining and has several benefits. It reduces the tendency of wood to split. It also reduces expansion and shrinkage, providing improved dimensional stability, and it makes the strength of the panel consistent across all directions. There is usually an odd number of plies, so that the sheet is balanced and warping is reduced. Because plywood is bonded with grains running against one another and with an odd number of composite parts, it is very hard to bend it perpendicular to the grain direction of the surface ply.

Plywood may be made of for example softwood, hardwood or tropical wood. Softwood plywood is usually made either of cedar, Douglas fir or spruce, pine, and fir (collectively known as spruce-pine-fir or SPF) or redwood and it is typically used for construction and industrial purposes.

Hardwood plywood may be made out of wood from angiosperm trees and used for demanding end uses. Hardwood plywood is characterized by its excellent strength, stiffness and resistance to creep. It has a high planar shear strength and impact resistance, which make it especially suitable for heavy-duty floor and wall structures. Oriented plywood construction has a high wheel-carrying capacity. Hardwood plywood has excellent surface hardness, and damage- and wear-resistance.

Tropical plywood may be made of mixed species of tropical wood, such as originally from the Asian region, but also from African and South American countries. Tropical plywood is superior to softwood plywood due to its density, strength, evenness of layers, and high quality. It is usually sold at a premium in many markets if manufactured with high standards.

Examples of veneers or plies with a showy appearance, which may be used in the plywoods, include mahogany, cedar, such as aromatic cedar or Spanish cedar, cherry, chestnut, birch, such as natural birch or white birch, pine, poplar, red adler, oak, such as red oak or white oak, rosewood, teak, walnut, maple, wenge, yew, and zebrawood. Plywood may contain one or more veneer(s) with a desired appearance, and it may further contain one or more veneers of other wood. For example the outermost veneer may be different than the other veneers.

The plywood may comprise 2-5 plies. In examples the plywood comprises at least three plies, such as 3-5 plies, 3-4 plies, or 4-5 plies, or three plies, four plies or five plies. Plywood comprising at least three plies is structurally more stable, rigid and wear resistant compared to plywood comprising two plies.

A typical adhesive material for attaching the plies of plywood is a liquid, thermosetting adhesive material containing synthetic resin, such as urea resin, melamine resin or phenolic resin, DAP resin, unsaturated polyester resins, alkyd resins, epoxy resins or denaturalized, copolycondensed or mixed resin obtained by using the synthetic resin. Also other suitable adhesives or resins may be used. Examples of suitable adhesives include polyethylene and derivatives thereof, polypropylene and derivatives thereof, polylactic acid (PLA) and derivatives thereof, polyurethane adhesives and polyethylene terephthalate (PET) and derivatives thereof. Polyethylene-based adhesives were found especially advantageous for providing good flexibility and tensile strength. Polylactic acid based adhesives, especially in combination with natural fibers, such as hemp, flax and/or cotton, were found especially advantageous for providing high tear strength to the fold lines, and the materials are also biodegradable.

In the present case it was found that wood-based materials, such as wood veneer or plywood, could be efficiently and accurately cut by using laser, so cassette or base elements with highly precise dimensions could be obtained easily and with low cost, and no chipping was observed. Laser produces a typical smooth surface, which can be easily recognized from wood-based material even by observing with naked eye. Microscopic methods may be also used for detecting the cut or machined surface to identify the cutting or machining method. A computer-controlled laser cutting device can be used. The accuracy of for example the lid was found important so that a lid which can be designed to fit tightly to the base could be obtained. When the lid can be accurately cut, the sidewalls do not need to be machined or cut in their thickness for receiving the lid. Therefore the sidewalls may have equal thickness through their whole area. The precise lid dimensions enable providing a lid, which can be manually locked to the base by simply pressing, wherein the compatible parts of the lid will be in contact with the extending wall portions and provide enough friction so that the lid is locked to the base, but also enables releasing the lid manually without needing any tools of the like helping means. Precise dimensions in the other parts as well facilitate the mechanical stability of the structure. A very durable and stable closed cassette can be obtained, which tolerates handling, for example mailing. A cassette made of wood-based materials, especially veneer, can tolerate very high forces during handling, which is essential to protect the content of the cassette. Further, with the present materials and structures there is no need to include any additional locking means or other attaching means, adhesives, hinges, or for example other than wood-based parts or materials, such as plastic. It is also desired to provide finished edges of the parts of the cassette, which can be obtained by using the laser.

Other cutting means and method may be used as well, such as such as diecutting, cutting with a blade, knife or the like, cutting with a CNC machine, cutting with a plotter, cutting with a computerized mat cutter (CMC) or a waterjet, or by sawing. Method and devices which are computer-controlled and thus programmable are preferred, as this enables high accuracy, repeatability and high throughput. However the quality of the cutting should be ensured also with these options. The cutting of these parts may be carried out by the first operator, who may be the manufacture of the parts, and/or the manufacture of the cassettes and/or bases. The latter one may be however also another operator, such as the second operator or a third operator.

In one embodiment the lid and preferably the base is obtained by laser cutting the wood-based material. A preparation method may comprise providing a computer-controlled cutting device, such as one or more disclosed herein, preferably a laser cutting device, and cutting the wood-based material with said device.

In one embodiment the lid is adapted to be manually releasably locked between the extending wall portions by the effect of friction between the extending wall portions and the lid. The lid may be provided in such form that there is substantially no clearance between the lid and the extending wall portions, so the elasticity of the wood material facilitates the locking. However the dimensions must be selected in such manner that the lid is operable manually and placing the lid does not cause such forces to the base that could weaken the attachment of the side walls to each other and/or to the bottom wall.

In one embodiment the lid comprises notches 22a, 22b, 22c, 22d adapted to fit to the two or more extending wall portions 18a, 18b, 18c, 18d. The notches as well as other edges and surfaces are preferably designed to form clean edges, joints and surfaces in the closed cassette, so the final outlook is finished.

In one embodiment the lid 20 has an equal thickness to the height of the extending wall portions 18a, 18b, 18c, 18d. The equal thickness means the same or substantially the same thickness as the height of the extending wall portions, so that when the lid is attached, it covers the cavity and the honeycomb, but the lid preferably does not increase the thickness of the cassette. Rather the outer surface of the lid shall be at the same level as the ends of the extending wall portions thus resulting in a finished box-type of structure. It may be desired to limit the thickness of the cassette to enable mailing. In such case the maximum thickness of the cassette, which refers to the smallest outer dimension or thickness, is preferably 30 mm or less. For example the thickness of the bottom wall placed below the side walls may be about 2 mm, the height of the side walls from the bottom to the slots may be about 20 mm, and the height of the extending wall portions may be about mm resulting in about 28 mm total thickness. The thickness of a packing material, box, envelope or the like may increase the thickness of the mail package, so the thickness of the cassette is preferably slightly below said 30 mm, such as about 29 mm or about 28 mm, or even less.

The sidewalls may all have equal length or perpendicular sidewalls may have different lengths. The length of a sidewall, i.e. the length of a side of the base or the cassette, may be in the range of 50-150 mm, such as 80-150 , 100-150 mm or 80-120 mm, such as about 100 mm. For example the base or the cassette may have dimensions of 100 mm x 100 mm x 28 mm or 120 mm x 120 mm x 28 mm. Such sizes can fit into most envelopes and may provide a suitable unit of honey for most purposes. The dimensions of the bases or cassettes may be designed to take into account the size of the interior of the hive, so that a plurality of bases can be inserted into the hive or a compartment thereof, such as into a super, in such way that it can be efficiently filled and no or very little space is left unused. Alternatively the hive may be designed according to the used bases.

One embodiment provides the honeycomb cassette or the base, wherein the honeycomb cassette or the base has a thickness between the bottom and the extending wall portions of the sidewall of 30 mm or less, such as 29 mm or less or 28 mm or less.

In one embodiment the base 10 comprises a rectangular bottom wall 12 made of a wood-based sheet and four sidewalls 14a, 14b, 14c, 14d made of wood-based sheets and comprising four extending wall portions 18a, 18b, 18c, 18d having a height in the range of 4-8 mm at the corners of the four sidewalls 14a, 14b, 14c, 14d, and the lid 20 is made of a wood-based sheet having an equal thickness to the height of the extending wall portions 18a, 18b, 18c, 18d. The wood-based sheet may be plywood, preferably having three plies.

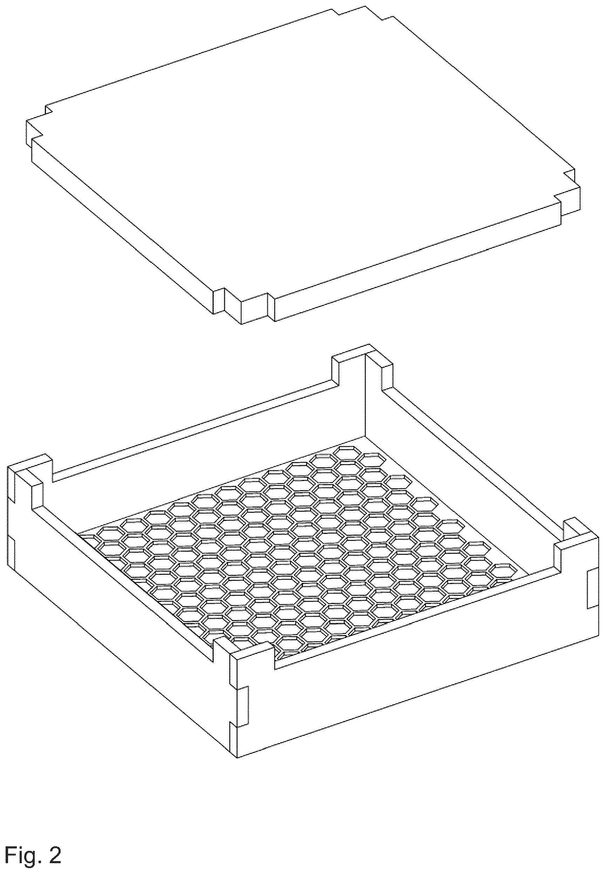

In order to facilitate the formation of the honeycomb in the cassette it is possible to provide a foundation for the bees to start building. Using a beeswax foundation was found especially suitable for wood-based materials. The beeswax foundation may be provided as a sheet, for example beeswax may be rolled into a sheet. The sheet may be solid; thus it contains no holes or apertures through the sheet. It is however possible to provide a ready pattern of a honeycomb comprising a plurality of interconnected hexagon-shapes so that the bees can base their honeycomb on the pattern, as shown in Figure 2. The pattern may be in a form of a raised figure, wherein the borders of the hexagons are raised, or alternatively lowered. This can be carried out by using a forming roll with corresponding pattern, wherein the rolling will result in formation of embossment or other formation of the pattern onto the surface of the beeswax foundation sheet. In one embodiment the beeswax foundation surface comprises a honeycomb pattern formed on the surface. The bottom wall does not need to have any specific surface or pattern to facilitate the formation of the foundation, so the base wall can be formed of any suitable sheet having a wooden surface. The beeswax foundation may be provided and/or formed by another operator, and/or it may be combined with the base by the same of different operator that manufactures the bases, such as the first, second or third operator, or another operator.

In one embodiment the cavity 16 comprises a beeswax foundation 30 attached to the bottom wall 12 by melting. The melting may be obtained by heating the bottom wall and/or one surface of the beeswax foundation sheet, applying the sheet onto the bottom wall, and allowing the beeswax to cool to bind it to the bottom wall. No adhesives are required. The heating may be implemented by using heated air, such as by a hot air blower, or a flame, which can provide fast heating even in few seconds, such as the bottom wall may be heated for 5-20 seconds, for example about 10 seconds, thus allowing fast manufacturing process. The bottom wall may be heated to a temperature in the range of 100-200°C, which is enough as the beeswax melts at about 65°C. Wood-based materials tolerate remarkably higher temperatures and heating times compared for example to plastics, which tends to melt easily. When wood is heated to high temperatures no such harmful substances are released as for example form plastics, not even from plywood. The heating devices are relatively small and inexpensive, which keeps the costs low and the same operator can carry out also this process step.

The present application provides a honeycomb cassette described herein comprising honey in honeycombs. The honey is produced by bees, and preferably the honeycombs are not processed or manipulated after that. The honeycombs may have a beeswax covering, as the bees usually cover the ready honeycombs. When it is desired to produce natural honey product, such as the honeycombs described herein, it is desired to minimize the human intervention. Preferably the honeycomb is not even touched by human hand before the lid is attached and the cassette is provided to the user. Preferably no artificial additives are used, and/or the honey is organic in the sense that it is food produced from organic farming methods and preferably certified organic according to organic farming standards.

The present disclosure provides a base 10 of a honeycomb cassette described herein comprising wood-based material and having a bottom wall 12 and one or more sidewalls 14a, 14b, 14c, 14d extending from the bottom wall and defining a cavity 16, wherein the one or more sidewalls comprise two or more extending wall portions 18a, 18b, 18c, 18d having a height in the range of 4-8 mm, such as 6-7 mm, the base 10 being adapted to receive a lid 20 comprising wood-based material and being adapted to fit between the extending wall portions 18a, 18b, 18c, 18d to cover the cavity 16.

The present disclosure provides a beehive comprising a plurality of the bases 10 of the honeycomb cassette. The beehive, also "a hive" as used herein, may be any suitable and/or known beehive. A typical example of a beehive comprises several overlapping parts, such as a solid bottom board, which bears the weight of the hive, a deep brood box (or deep super), which is the bee box where the queen lays her brood eggs, a queen excluder, which is a barrier preventing the queen to enter the honey super, one or more (medium) honey super(s), which is the bee box where the bees store honey in, and an inner cover (or rice bag) and a top cover or roof. With the present cassette bases however there is no need to include the queen excluder, as the queen cannot enter the cassette bases because of her size. It is also possible to implement a beehive with less parts with the present solution.

The present disclosure provides a method for preparing a honeycomb cassette for production of bee comb honey, which cassette may be any of the cassettes described herein. The method comprises providing wood-based material and cutting and/or machining the wood-based material to obtain a base 10 and a lid 20. The method may comprise
- providing wood-based material, such as one or more sheets comprising wood,
- cutting and/or machining the wood-based material to obtain a base 10 comprising wood-based material and having a bottom wall 12 and one or more sidewalls 14a, 14b, 14c, 14d extending from the bottom wall and defining a cavity 16, wherein the one or more sidewalls comprise two or more extending wall portions 18a, 18b, 18c, 18d having a height in the range of 4-8 mm, such as 6-7 mm, and a lid 20 comprising wood-based material and being adapted to fit between the extending wall portions 18a, 18b, 18c, 18d to cover the cavity 16,
- providing a beeswax foundation, for example as a beeswax sheet,
- heating the bottom wall to a temperature above the melting point of the beeswax,
- applying the beeswax foundation onto the heated bottom wall 12 to partly melt the beeswax, and allowing the bottom wall and/or the beeswax to cool to attach the beeswax foundation onto the bottom wall. In one embodiment the method comprises applying the beeswax foundation sheet onto the heated bottom wall 12 to partly melt the beeswax, and allowing the bottom wall and/or the beeswax to cool to attach the beeswax foundation sheet onto the bottom wall. Alternatively the beeswax foundation may be heated to partly or fully melt the beeswax, in which case the beeswax may be moulded, preferably to form a layer, a sheet and/or other form, such as before or after applying onto the bottom wall. Preferably the beeswax, such as a sheet of a beeswax, is melted at one side only, which side is applied onto the bottom wall.

In one embodiment the cutting comprises laser cutting, preferably laser cutting to obtain at least the lid, such as laser cutting with a computer-controlled laser cutting device. In one embodiment the method comprises laser cutting the lid, such as only the lid. However it was found out that all the parts of the cassette can be cut with the same method to save time, and there is no need to provide different cutting devices. The wood-based sheets can be decorated, such as printed, before the cutting, especially in large production.

Similarly a method for preparing a cassette base is provided, with the exception to the previous, that the method does not include preparing the lid.

The cutting/machining of the wood-based materials may be carried out by using controllable, repeatable, efficient, accurate and/or fast methods, as discussed herein. The same applies to heating of the wood-based materials, which may be carried out by providing hot air, flame, electrical heating element(s) and the like methods and applicable devices. Also printing of the wood-based materials is simple and fast. The manufacturing methods and devices can be easily upscaled and used in industrial scale thus allowing fast, efficient and inexpensive process.

The used wood-based material, such as the plywood, is suitable for printing or for forming images or figures. The cassette may be provided as printed or otherwise illustrated or decorated containing one or more texts, images or figures formed by printing or by another method, or it may be provided without such prints, texts, images or figures, for example as a printable blank, which contains a printable surface. The method for preparing the honeycomb cassette may comprise printing one or more parts of the cassette, such as a printable surface thereof, preferably with one or more image and/or text forming methods disclosed herein and/or with other suitable methods.

A printable surface is a surface of the wood-based material, in general the surface which forms the outer surface of the cassette, which may receive printing, i.e. it does not contain such a coating or other ingredients which would prevent printing ink or the like attaching to the surface. In the latter case the cassette may be printed or imaged afterwards, for example at separate premises and/or by separate operator.

In one example the method comprises printing, embossing, debossing, pyrography and/or hot foiling the wood-based material, the base and/or the cassette. Printing may be considered as a process for reproducing text and/or images using a master form or template. The printing as used herein may include the traditional printing methods and also embossing, debossing, pyrography, hot foiling or other suitable methods for forming the text and/or images onto the wood-based material or the cassette. The printing may be for example screen printing or offset printing. One or more suitable printing inks or other coloured substances or means for forming colour can be used.

Pyrography or pyrogravure is the art of decorating wood with burn marks resulting from the controlled application of a heated object such as a poker. It is also known as pokerwork or wood burning. Pyrography may be carried out by using solid-point burners, wire-nib burners, or laser cutters.

Hot foiling or hot foil stamping is a process of using heat and pressure to apply metallic foil or holograms to wood-based material. Hot foiling may include simple flat foil stamping, deep embossing or embossing combined with foil stamping, hologram and/or holographic foil application or foil stamping combined with micro and/or structural embossing. Also combinations of printing, illustrating or decorating methods disclosed herein may be used.

The printing can be carried out by any operators discussed herein, for example the first operator manufacturing the cassette parts, and optionally the bases and/or cassettes. The printing operator may also be another operator to which the parts and/or the assembled bases and/or cassettes are sent. When different manufacturing steps are carried out by different operators, one operator does not have to have equipment and/or knowhow to carry out all the required manufacturing and/or finishing steps. The present wood-based materials tolerate packing and handling so sending the materials to different operators does not require extra care. The present disclosure also discloses a set of parts, as disclosed herein, for assembling one or more, preferably a plurality, of bases and/or cassettes disclosed herein. The set of parts may comprise one or more bottom walls, side walls and lids, preferably in amounts enabling assembling a plurality of cassettes. The set of parts may be printed or unprinted. The set of parts may be packed in a package, preferably for storing, handling, sending, providing, assembling and/or selling. Such a set may be provided for example to a beekeeper who can assemble the bases and cassettes and provide their honey in the cassettes directly to customers.

The present disclosure provides a method for producing comb honey, the method comprising
- providing one or more of the bases 10 of the honeycomb cassette in a beehive or the beehive comprising one or more of the bases 10 of the honeycomb cassette.
- allowing the bees to produce comb honey to the one or more cassette bases 10, and
- removing the one or more cassette bases 10 comprising comb honey from the beehive and providing, adding and/or placing a lid 20 comprising wood-based material and being adapted to fit between the extending wall portions 18a, 18b, 18c, 18d to cover the cavity 16, preferably to provide the honeycomb cassette described herein. The method may comprise providing the one or more cassettes comprising honey in honeycombs without further processing the cassette bases or the content thereof, such as without human intervention, for example without touching by bare hands, without separating the honey from the honeycombs and/or without using additives. The method may also comprise packing the one or more cassettes, such as into one or more packings, bags, envelopes, boxes and the like, for example for delivering.

The method may further comprise delivering, such as sending, providing and/or selling honey and/or the one or more cassettes comprising honey in honeycombs, preferably to a destination, such as to an end user, which may be a customer, for example an individual, a dealer or a distributor. The delivery chain may include one or more further operators, which complicates the process and require products, which tolerate the process steps and the time required in the process. The delivering may be carried out by mail, by a courier, or by any other suitable sending, delivering and/or transportation service and/or means. The present cassettes tolerate different ways of delivering and also longer storage and deliver times and different conditions, so the cassettes enable a variety of delivering means and providing the product to a variety of end users regardless of distance. The cassettes may be provided to shops and stores, and/or provided from online shops, and may be stored and/or presented for example on shelves and/or in a freezer or a refrigerator. No specific storage spaces are necessarily required.

The present disclosure also provides use of the bases and/or cassettes for producing comb honey, and for providing comb honey, including the actions disclosed herein such as storing, delivering, sending, providing and/or selling the honey and/or the one or more cassettes comprising honey in honeycombs.

### Examples

Honeycomb cassettes were made from plywood sheets having three plies. 2 mm plywood sheets were cut to obtain compatible parts, which were combined without glue to obtain cassette bases. Compatible lids were prepared from 6 mm plywood. The cassette had a thickness of 28 mm and a length of a side of 100 mm. , The cassette base was according to the schematic drawing of Figure 1 comprising a bottom wall 12 made of a plywood sheet, and four sidewalls 14a, 14b, 14c, 14d each made of the same plywood sheet attached to each other by finger joints. The sidewall elements were designed in such way that a portion extends from each joint site of two side elements from both side elements thus forming extensions 18a, 18b, 18c, 18d at the corners of the side walls on the opposite side of the side walls to the bottom wall. These protruding extensions of the side walls were designed to receive the compatible lid and the extensions had a height of 6 mm.

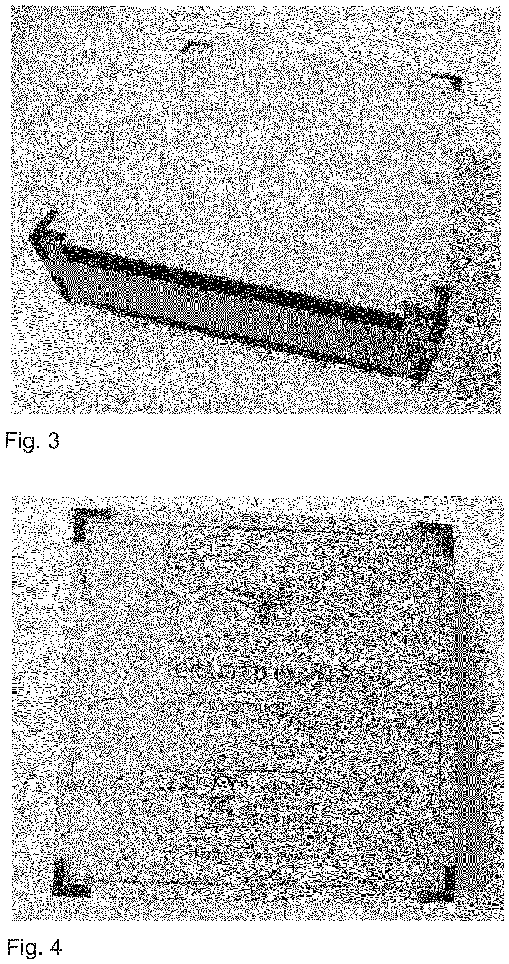

A compatible lid 20 made of a square-shaped 6 mm plywood sheet was provided having notches at each corner adapted to fit to the protruding extensions of the side walls 18a, 18b, 18c, 18d at the corners of the side walls. The lid was machined by a computer-controlled laser cutting device to obtain such fitting with the base that the lid was attached by the effect of friction and elasticity of the plywood to the base and was not released if the cassette is turned upside down. The lid locked when pressed manually, and could be also released manually without requiring excess force or tools. As the thickness of the lid sheet was the same as the height of the side wall extensions, the lid sealed the cassette leaving no protruding parts. Figure 3 shows a photograph of a closed honeycomb cassette made of plywood.

The outer surface of the bottom wall was decorated with text and images before assembly by printing to obtain a commercial product with a finished appearance. Figure 4 shows a photograph of a backside of a honeycomb cassette made of plywood having a foiling on the back surface. i.e. the outer surface of the bottom wall.

A beeswax foundation was provided as a formed sheet designed to fit into the cavity 19 onto the inner surface of the bottom wall 12 and having a raised honeycomb pattern. The bottom wall made of plywood was heated with a hot air blower for about 10 seconds prior to applying the beeswax foundation sheet. The surface temperature of the bottom wall was in the range of 100-200°C. The bottom of the sheet melted and after cooling it was tightly attached to the bottom wall. The plywood of the bottom wall was not damaged in the heating.

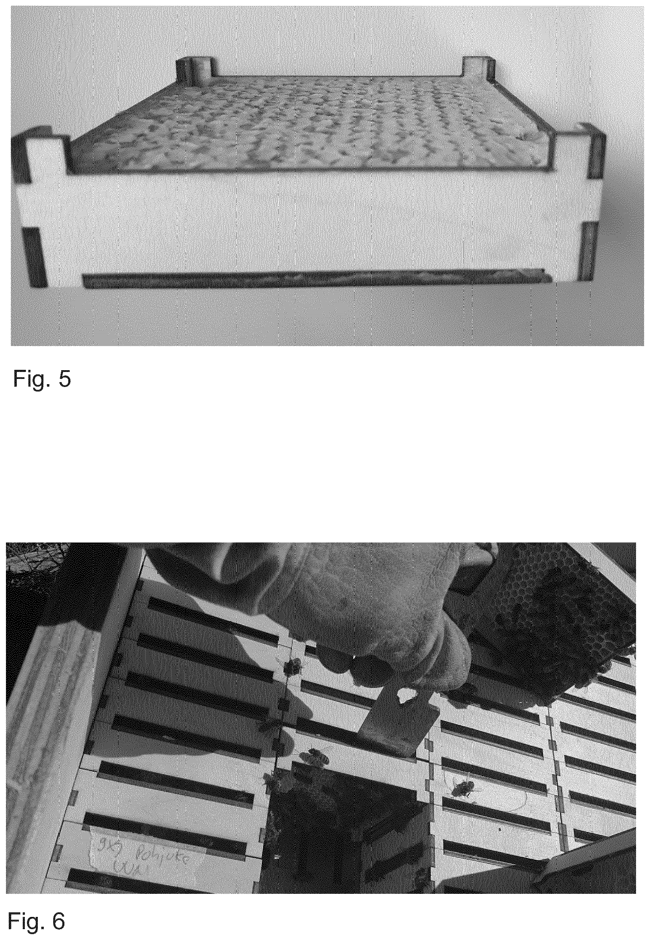

Figure 5 shows a photograph of a sideview of an opened honeycomb cassette containing filled and sealed honeycomb. The extending wall portions 18a, 18b, 18c, 18d of the sidewalls having a height of 6 mm can be seen at the junctions of the sidewalls. The height of the protruding extensions defines elongated slots 15 on each of the four sides of the base 10 via which the bees can enter and they also define the working space in the base when the bases are installed in the hive, which limits the height of the formed honeycombs so that it will not be too high. The height of the honeycomb was about 20 mm and the height was substantially the same at the whole area. The working space height also enabled the bees to facilitate evaporation of moisture from the honeycombs by their wings in the cassette bases.

Figure 6 shows in a photograph how the plurality of bases of the honeycomb cassettes are arranged inside of a beehive. It can be seen how the slots for entering into the cassette bases 10 are defined by the height of the extending wall portions 18a, 18b, 18c, 18d. The bases of the honeycomb cassettes were simply placed into the hive manually and picked therefrom one by one. Figure 6 also shows how a beekeeper used a chisel to release bases attached to each other by propolis. The chisel was pushed between two adjacent bases and turned, which causes strong forces to the bases. The bases made of plywood tolerated such treatment well and were not damaged. On the other hand, bases made of plastic were easily damaged and it was very difficult to remove plastic bases from the hive as undamaged.

In the present case the final honey-filled cassette bases were picked from the beehive by using gloves, and a lid was applied immediately. Therefore the honeycomb was practically untouched by human hands, which increases the value of the final product as ecological, organic and original product.

Figure 7 shows a photograph of an opened plywooden honeycomb cassette containing filled honeycomb seen from above. The bees have sealed the honeycomb with wax after the honeycomb was filled. The base has been filled completely and the sealed surface is even, which provides an attractive appearance of the product.

Figure 8 shows as a comparison an opened plastic honeycomb cassette containing filled honeycomb seen from above. This cassette has slots only on two sides of the cassette. It can be seen from the figure that the sides of the cavity of the base are filled incompletely and there exist plurality of empty honeycombs. The height of the honeycombs is also lower at the sides, especially at the sides having no slots.

## Claims

1. A honeycomb cassette for bee comb honey, the honeycomb cassette comprising
- a base (10) comprising wood-based material and having a bottom wall (12) and one or more sidewalls (14a, 14b, 14c, 14d) extending from the bottom wall and defining a cavity (16), wherein the one or more sidewalls comprise two or more extending wall portions (18a, 18b, 18c, 18d) having a height in the range of 4-8 mm, such as 6-7 mm, and
- a lid (20) comprising wood-based material and being adapted to fit between the extending wall portions to cover the cavity (16), such as wherein the lid comprises notches (22a, 22b, 22c, 22d) adapted to fit to the two or more extending wall portions (18a, 18b, 18c, 18d), preferably wherein the lid (20) is separate from the base (10).

2. A base (10) of a honeycomb cassette, such as the honeycomb cassette of claim 1, comprising wood-based material and having a bottom wall (12) and one or more sidewalls (14a, 14b, 14c, 14d) extending from the bottom wall and defining a cavity (16), wherein the one or more sidewalls comprise two or more extending wall portions (18a, 18b, 18c, 18d) having a height in the range of 4-8 mm, such as 6-7 mm, the base (10) being adapted to receive a lid (20) comprising wood-based material and being adapted to fit between the extending wall portions (18a, 18b, 18c, 18d) to cover the cavity (16).

3. The honeycomb cassette of claim 1 or the base of claim 2, wherein the lid (20) has an equal thickness to the height of the extending wall portions (18a, 18b, 18c, 18d).

4. The honeycomb cassette of claim 1 or 3 of the base of claim 2 or 3, wherein the base (10) comprises a rectangular bottom wall (12) made of a wood-based sheet and four sidewalls (14a, 14b, 14c, 14d) made of wood-based sheets and comprising four extending wall portions (18a, 18b, 18c, 18d) having a height in the range of 4-8 mm, such as 6-7 mm, at the corners of the four sidewalls (14a, 14b, 14c, 14d), and the lid (20) is made of a wood-based sheet and having an equal thickness to the height of the extending wall portions (18a, 18b, 18c, 18d).

5. The honeycomb cassette of any of the claims 1 or 3-4 or the base of any of the claims 2-4, wherein the wood-based material comprises a plywood sheet.

6. The honeycomb cassette of any of the claims 1 or 3-5 or the base of any of the claims 2-5, wherein the cavity (16) comprises a beeswax foundation (30) attached to the bottom wall (12) by melting, preferably the beeswax foundation surface comprising a honeycomb pattern formed on the surface.

7. The honeycomb cassette of any of the claims 1 or 3-6 or the base of any of the claims 2-6, wherein the lid and preferably the base is obtained by laser cutting the wood-based material.

8. The honeycomb cassette of any of the claims 1 or 3-7 or the base of any of the claims 2-7, wherein the lid is adapted to be manually releasably locked between the extending wall portions by the effect of friction between the extending wall portions and the lid.

9. The honeycomb cassette of any of the claims 1 or 3-8 or the base of any of the claims 2-8 comprising honey in honeycombs.

10. The honeycomb cassette of any of the claims 1 or 3-9 or the base of any of the claims 2-9, wherein the honeycomb cassette or the base has a thickness between the bottom and the extending wall portions of the sidewall of 30 mm or less.

11. A beehive comprising a plurality of the bases (10) of a honeycomb cassette of any of the claims 2-10.

12. A method for preparing a honeycomb cassette for production of bee comb honey, the method comprising
- providing wood-based material, such as a sheet comprising wood,
- cutting the wood-based material to obtain a base (10) comprising wood-based material and having a bottom wall (12) and one or more sidewalls (14a, 14b, 14c, 14d) extending from the bottom wall and defining a cavity (16), wherein the one or more sidewalls comprise two or more extending wall portions (18a, 18b, 18c, 18d) having a height in the range of 4-8 mm, such as 6-7 mm, and a lid (20) comprising wood-based material and being adapted to fit between the extending wall portions (18a, 18b, 18c, 18d) to cover the cavity (16,
- providing a beeswax foundation, such as a beeswax sheet,
- heating the bottom wall to a temperature above the melting point of the beeswax,
- applying the beeswax foundation onto the heated bottom wall (12) to partly melt the beeswax, and allowing to cool to attach the beeswax foundation onto the bottom wall.

13. The method of claim 12, wherein the cutting comprises laser cutting to obtain at least the lid, such as laser cutting with a computer-controlled laser cutting device

14. The method of claim 12 or 13, wherein the honeycomb cassette is the honeycomb cassette of any of the claims 3-10.

15. A method for producing comb honey, the method comprising
- providing a plurality of the bases (10) of a honeycomb cassette of any of the claims 2-10 in a beehive or the beehive of claim 11,
- allowing the bees to produce comb honey to the bases (10), and
- removing a base (10) comprising comb honey from the beehive and adding a lid (20) comprising wood-based material and being adapted to fit between the extending wall portions (18a, 18b, 18c, 18d) to cover the cavity (16), preferably to provide the honeycomb cassette of any of the claims 1 or 3-10, preferably providing the one or more cassettes comprising honey in honeycombs without further processing the cassette bases or the content thereof, optionally also packing the one or more cassettes.
